(19) Europäisches Patentamt
European Patent Office
Office européen des brevets

(11) **EP 3 234 679 B1**

(12) **EUROPÄISCHE PATENTSCHRIFT**

(45) Veröffentlichungstag und Bekanntmachung des Hinweises auf die Patenterteilung:
**26.09.2018 Patentblatt 2018/39**

(51) Int Cl.:
*G02B 21/00* *(2006.01)*   *G02B 21/10* *(2006.01)*
*G02B 21/16* *(2006.01)*   *G02B 21/36* *(2006.01)*

(21) Anmeldenummer: **15795201.1**

(22) Anmeldetag: **18.11.2015**

(86) Internationale Anmeldenummer:
**PCT/EP2015/076939**

(87) Internationale Veröffentlichungsnummer:
**WO 2016/096303 (23.06.2016 Gazette 2016/25)**

(54) **VERFAHREN ZUR LICHTBLATTMIKROSKOPISCHEN UNTERSUCHUNG EINER PROBE**

METHOD FOR EXAMINING A SPECIMEN BY MEANS OF LIGHT SHEET MICROSCOPY

PROCÉDÉ D'EXAMEN PAR MICROSCOPIE À NAPPE DE LUMIÈRE D'UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2014 DE 102014119255**

(43) Veröffentlichungstag der Anmeldung:
**25.10.2017 Patentblatt 2017/43**

(73) Patentinhaber: **Carl Zeiss Microscopy GmbH 07745 Jena (DE)**

(72) Erfinder:
• **KALKBRENNER, Thomas**
  **07745 Jena (DE)**
• **LIPPERT, Helmut**
  **07745 Jena (DE)**
• **SIEBENMORGEN, Jörg**
  **07743 Jena (DE)**

(74) Vertreter: **Patentanwälte Geyer, Fehners & Partner mbB**
**Sellierstrasse 1**
**07745 Jena (DE)**

(56) Entgegenhaltungen:
**EP-A1- 2 806 262    WO-A1-2014/017067
WO-A1-2014/026683**

• **MING ZHAO ET AL: "Cellular imaging of deep organ using two-photon Bessel light-sheet nonlinear structured illumination microscopy", BIOMEDICAL OPTICS EXPRESS, Bd. 5, Nr. 5, 1. Mai 2014 (2014-05-01), Seite 1296, XP055246671, United States ISSN: 2156-7085, DOI: 10.1364/BOE.5.001296**
• **LI RUNZE ET AL: "Selective plane illumination microscopy with structured illumination based on spatial light modulators", PROGRESS IN BIOMEDICAL OPTICS AND IMAGING, SPIE - INTERNATIONAL SOCIETY FOR OPTICAL ENGINEERING, BELLINGHAM, WA, US, Bd. 8949, 12. März 2014 (2014-03-12), Seiten 89491S-89491S, XP060033925, ISSN: 1605-7422, DOI: 10.1117/12.2040319 ISBN: 978-1-5106-0027-0**

**Beschreibung**

**Gebiet der Erfindung**

Die Erfindung betrifft ein Verfahren zur lichtblattmikroskopischen Untersuchung einer Probe und behandelt unter anderem das Problem der Analyse von Proben, die mit mehreren Farbstoffen markiert sind.

**Stand der Technik**

Die Untersuchung biologischer Proben, bei der die Beleuchtung der Probe mit einem Lichtblatt erfolgt, dessen Ebene - die Lichtblattebene - die optische Achse der Detektion - die Detektionsrichtung - in einem von Null verschiedenen Winkel schneidet, hat in jüngster Zeit an Bedeutung gewonnen. Üblicherweise schließt die Lichtblattebene dabei mit der Detektionsrichtung, die in der Regel der optischen Achse des Detektionsobjektivs entspricht, einen von Null verschiedenen, oft - jedoch nicht zwingend - einen rechten Winkel ein. Solche Untersuchungsverfahren werden überwiegend in der Fluoreszenzmikroskopie eingesetzt und unter dem Begriff LSFM (*Light Sheet Fluorescence Microscopy*) zusammengefasst. Ein Beispiel ist das in der DE 102 57 423 A1 und der darauf aufbauenden WO 2004/0535558 A1 beschriebene und als SPIM (*Selective Plane Illumination Microscopy*) bezeichnete Verfahren, mit dem sich in relativ kurzer Zeit räumliche Aufnahmen auch dickerer Proben erstellen lassen: Auf der Basis von optischen Schnitten kombiniert mit einer Relativbewegung in einer Richtung senkrecht zur Schnittebene ist eine bildliche/räumlich ausgedehnte Darstellung der Probe möglich.

Gegenüber anderen etablierten Verfahren wie der konfokalen Laser-Scanning-Mikroskopie oder der Zwei-Photonen-Mikroskopie weisen die LSFM-Verfahren mehrere Vorzüge auf. Da die Detektion im Weitfeld erfolgen kann, lassen sich größere Probenbereiche erfassen. Zwar ist die Auflösung etwas geringer als bei der konfokalen Laser-Scanning-Mikroskopie, jedoch lassen sich mit der LSFM-Technik dickere Proben analysieren, da die Eindringtiefe höher ist. Darüber hinaus ist die Lichtbelastung der Probe bei diesem Verfahren am geringsten, was die Gefahr des Ausbleichens einer Probe reduziert, da die Probe nur durch ein dünnes Lichtblatt in einem von Null verschiedenen Winkel zur Detektionsrichtung beleuchtet wird.

Anstelle eines rein statischen Lichtblatts kann auch ein quasi-statisches Lichtblatt erzeugt werden, indem die Probe mit einem Lichtstrahl schnell abgetastet wird. Die lichtblattartige Beleuchtung entsteht, indem der Lichtstrahl einer sehr schnellen Relativbewegung zu der zu beobachtenden Probe unterworfen wird und dabei zeitlich aufeinanderfolgend mehrfach aneinander gereiht wird. Dabei wird die Integrationszeit der Kamera, auf deren Sensor die Probe abgebildet wird, so gewählt, dass die Abtastung innerhalb der Integrationszeit abgeschlossen wird.

Ein der Hauptanwendungen der Lichtblattmikroskopie liegt in der Bildgebung mittelgroßer Organismen von einigen 100 μm bis hin zu wenigen mm. In der Regel werden diese Organismen in ein Gel, beispielsweise Agarose, eingebettet, welches sich wiederum in einer Glaskapillare befindet. Die Glaskapillare wird von oben bzw. von unten in eine wassergefüllte Probenkammer eingebracht und die Probe ein Stück aus der Kapillare herausgedrückt. Die Probe in der Agarose wird mit einem Lichtblatt beleuchtet und die Fluoreszenz mit einem Detektionsobjekiv, das - bevorzugt, jedoch nicht zwingend - senkrecht zum Lichtblatt und damit auch senkrecht zum Beleuchtungsobjektiv eines optischen Systems zur Erzeugung eines Lichtblatts steht, auf eine Kamera abgebildet.

Dieses Verfahren der Lichtblattmikroskopie unterliegt jedoch gewissen Einschränkungen. Zum ersten sind die zu untersuchenden Proben relativ groß, sie entstammen der Entwicklungsbiologie. Zum zweiten ist aufgrund der Probenpräparation und der Abmessungen der Probenkammer das Lichtblatt relativ dick und somit die erzielbare axiale Auflösung eingeschränkt. Drittens ist die Präparation der Proben aufwendig und nicht kompatibel zu Standard-Probenpräparationen und Standard-Probenhalterungen wie in der Fluoreszenzmikroskopie für einzelne Zellen üblich.

Um diese Einschränkungen teilweise zu umgehen, wurde in den letzten Jahren ein neuartiger Aufbau realisiert, bei dem das Beleuchtungsobjektiv und das Detektionsobjektiv bevorzugt senkrecht zueinander stehen und unter einem Winkel von 45° von oben auf die Probe gerichtet sind. Solche Vorgehensweisen werden beispielsweise in der WO 2012/110488 A1 und in der WO 2012/122027 A1 beschrieben.

Zur Beleuchtung der Probe wird in der Regel kohärentes Licht eines Lasers verwendet. Die Wellenlänge des Lichts wird in der Fluoreszenzmikroskopie in Abhängigkeit von Markern gewählt, welche zur Fluoreszenzemission angeregt werden sollen. Im einfachsten Fall lässt sich beispielsweise ein Lichtstrahl mit einem Intensitätsprofil, welches einer Gaußfunktion entspricht, statisch mittels Zylinderlinsen zu einem Lichtblatt formen, oder quasi-statisch mittels Abtastung und darauf abgestimmter Integrationszeit der Kamera. Von Vorteil ist dabei eine strukturierte Beleuchtung der Probe, womit die Auflösung erhöht werden kann. So wird beispielsweise in einem Artikel von V. Kettunen et al., "Propagation-invariant spot arrays", erschienen in Optics Letters 23(16), Seite 1247, 1998, die kohärente Überlagerung von Besselstrahlen beschrieben. Die Überlagerung wird erreicht, indem mit Hilfe eines Algorithmus ein Phasenelement berechnet wird, das in die Pupille eingebracht werden kann. Wird das Spektrum eines Besselstrahls in die Pupille abgebildet, erzeugt das Phasenelement eine Vielzahl von Besselstrahlen, die sich in der Probe überlagern. Das Phasenelement ähnelt einem sternförmigen Gitter mit den Phasenwerten 0 und $\pi$. Es wird als Bedingung angegeben, dass die Abstände der einzelnen Bessel-strahlen groß sein müssen, da es sonst zu unerwünschten Interferenzeffekten kommen kann.

In der US 2013/0286181 A1 werden die Interreferenzeffekte zwischen den einzelnen Bessel-strahlen gezielt genutzt, um ein ausgedehntes und strukturiertes Lichtblatt zu erzeugen. Hierbei werden die Besselstrahlen so nah nebeneinandergelegt, dass sich die Nebenmaxima der einzelnen Besselstrahlen ober- und unterhalb der Ausbreitungsebene, der Lichtblattebene, destruktiv überlagern. Je nach Abstand der einzelnen Besselstrahlen zueinander ergeben sich unterschiedliche Interferenzmuster.

In der WO 2014/005682 A1 wird die Erzeugung von sogenannten $sinc^3$-Strahlen beschrieben. In der Probe lässt sich damit ein nahezu quaderförmiges Lichtblatt mit nur geringem Nebenmaxima erzeugen. Der $sinc^3$-Strahl kann im Frequenzraum als das Produkt dreier $sinc^3$-Funktionen beschrieben werden:

$$f = f_{vr} f_{vx} f_{vy}$$

mit

$$f_{vr}(v_r) = \mathrm{sinc}\left[\frac{(v_r - c_r)^2}{w_z}\right], \quad f_{vx}(v_x) = \mathrm{sinc}\left[\frac{(v_x - c_x)^2}{w_x}\right], \quad f_{vy}(v_y) = \mathrm{sinc}\left[\frac{(v_y - c_y)^2}{w_y}\right]$$

und

$$v_r(v_x, v_y) = \sqrt{v_x^2 + v_y^2} \quad .$$

Die Koeffizienten $c_r$, $c_x$ und $c_y$ geben die Position des $sinc^3$-Strahls in der Pupillenebene an, die Koeffizienten $w_x$, $w_y$ und $w_z$ geben die Breite des $sinc^3$-Strahls in der jeweiligen Richtung an.

Die Fourier-Transfomation dieser Funktion f ergibt das komplexe elektrische Feld EF des Lichtblatts. Die Intensitätsverteilung I im Fokus ergibt sich aus I = abs(EF)$^2$, die Phase $\varphi$ ergibt sich zu $\varphi$ = arg(EF). Auch $sinc^3$-Strahlen können kohärent überlagert werden, so dass ein strukturiertes, gitterartiges Lichtblatt entsteht.

Zur Erzeugung der oben beschriebenen Strahlarten lassen sich beispielsweise räumliche Lichtmodulatoren (*SLM, spatial light modulator*) verwenden. Für Bessel-Strahlen ist dies beispielsweise in einem Artikel von Rohrbach et al., "A line scanned light-sheet microscope with phase shaped self-reconstructing beams", erschienen in Optics Express 18, Seite 24229 im Jahr 2010 beschrieben. Dabei gibt es zwei Arten von räumlichen Lichtmodulatoren, die sich durch die verwendeten Flüssigkristalle unterscheiden.

Nematische SLM ermöglichen einen maximalen kontinuierlich einstellbaren Phasenhub von 0 bis hin zu $6\pi$. Allerdings sind diese SLM relativ langsam: In der Regel haben Sie Bildwiederholraten von etwa 60 Hz, maximal von bis zu 500 Hz. Hingegen liegt die Beugungseffizienz von nematischen SLM bei über 90%.

Auf der anderen Seite gibt es ferroelektrische SLM, welche nur zwischen Zuständen ohne Phasenhub und einem Phasenhub von $\pi$ hin- und herschalten können. Dafür sind diese SLM sehr schnell schaltbar, so dass sich Bildwiederholraten von bis zu 4000 Hz erreichen lassen. Allerdings ist die Beugungseffizienz mit etwa 14% sehr gering.

Beide SLM-Arten haben gemeinsam, dass der erzielbare Phasenhub von der Wellenlänge des eingestrahlten Laserlichts abhängt. Ein nematischer SLM sollte idealerweise so kalibriert sein, dass er einen kontinuierlichen Phasenhub von 0 bis zu einer ganzen Wellenlänge, also $2\pi$ aufweist. Dieser Phasenhub kann allerdings nur bei einer einzigen Wellenlänge eingestellt werden, für die er dann ausgelegt ist. Sobald der SLM mit einem Laser anderer Wellenlänge bestrahlt wird, verändert sich der Phasenhub und ist ungleich $2\pi$. Bei kürzerer Wellenlänge wird der Phasenhub größer, bei längerer Wellenlänge verringert sich der Phasenhub.

Bei einem ferroelektrischen SLM verhält es sich ähnlich. Auch hier wird der Phasenhub von $\pi$ nur bei derjenigen Wellenlänge erreicht, für die das auf dem SLM dargestellte Muster ausgelegt ist. Bei abweichenden Wellenlängen weicht der Phasenhub von $\pi$ ab. Dies hat direkte Auswirkungen auf die Erzeugung der oben genannten Bessel- oder $sinc^3$-Strahlen, so können diese Strahlen nur dann optimal erzeugt werden, wenn der Phasenhub kontinuierlich zwischen 0 und $2\pi$ variiert, wie es für Bessel- und Mathieustrahlen notwendig ist, bzw. wenn der Phasenhub exakt $\pi$ beträgt, wie für kohärent überlagerte Bessel- oder $sinc^3$-Strahlen der Fall ist.

Zur fluoreszenzmikroskopischen Analyse wird eine Probe oft mit verschiedenen Markern präpariert, die jeweils verschiedene Bereiche der Probe sichtbar machen können. Daher ist es wünschenswert, in der Lichtblattmikroskopie die Probe mit Lichtblättern verschiedener Wellenlängen anzuregen. Bei Verwendung eines räumlichen Lichtmodulators zur Strahlformung kann eine optimale Mehrfarbanregung realisiert werden, wenn die einzelnen verschiedenfarbigen Lichtblätter sequenziell eingestrahlt werden und beim Wechsel der Wellenlänge das Phasenmuster auf dem SLM angepasst wird. Beispielsweise wird in einem ersten Durchgang der SLM auf eine erste Laserwellenlänge eingestellt und ein Bildstapel in z-Richtung, der Detektionsrichtung, bei dieser Wellenlänge aufgenommen. Im Anschluss wird der SLM auf eine zweite Wellenlänge eingestellt und abermals ein Bildstapel bei dieser Wellenlänge aufgenommen. Diese Methode hat jedoch den Nachteil, dass die Aufnahme des Bildstapels relativ lange dauern kann, bis hin zu mehreren zehn Sekunden. Bewegt oder verändert sich die Probe während dieser Zeit, stimmen die verschiedenfarbigen Bildstapel nicht mehr überein und lassen sich nicht zu einem Gesamtbild kombinieren.

Alternativ kann jedes Einzelbild des Bildstapels erst mit den verschiedenen Wellenlängen aufgenommen werden, bevor das nächste Bild eines Bildstapels aufgenommen wird. Dies hat jedoch den Nachteil, dass bei Belichtungszeiten von etwa 10 ms die Optimierung des räumlichen Lichtmodulators auf die neue Laserwellenlänge etwa 100 Mal pro Sekunde stattfinden muss. Mit normalen nematischen SLM lässt sich dies nicht erreichen, so dass ferroelektrische SLM mit ihrer geringen Lichteffizienz und dem eingeschränkten Phasenhub verwendet werden müssen.

## Beschreibung der Erfindung

Die Aufgabe der Erfindung besteht darin, eine Methode bereitzustellen, die es ermöglicht, eine Probe mit einem mehrfarbigen Lichtblatt unterschiedlicher Wellenlängen simultan bzw. quasi-simultan in sehr kurzer Zeit mit statischer Phasenmodulation zu beleuchten, so dass gleichzeitig für mehrere Farben detektiert werden kann und die Aufnahmedauer gegenüber einer sequentiellen Anregung reduziert wird, wobei bevorzugt auch nematische SLM aufgrund ihrer hohen Beugungseffizienz verwendet werden sollen.

Diese Aufgabe wird für ein Verfahren zur lichtblattmikroskopischen Untersuchung einer Probe gelöst, indem mehrere Beleuchtungswellenlängen ausgewählt werden, aus denen Beleuchtungslicht für die Probe zusammengesetzt wird. Für eine mittlere Wellenlänge wird dann die Modulationstiefe eines phasenselektiven Elements auf $\pi$ festgelegt. Die mittlere Wellenlänge kann dabei die mittlere der verwendeten Wellenlängen sein, um für den gesamten Bereich, aus dem die Wellenlängen ausgewählt werden, ähnliche Bedingungen zu erhalten, ist es jedoch vorteilhaft, als mittlere Wellenlänge den Mittelwert der langwelligsten und der kurzwelligsten Wellenlänge zu verwenden. Die mittlere Wellenlänge kann aber auch anhand anderer Kriterien festgelegt werden, beispielsweise kann sie mit der Wellenlänge eines Lasers übereinstimmen, der im Vergleich mit anderen, gleichzeitig für andere Wellenlängen verwendeten Lasern, eine geringere Leistung hat und für den daher eine hohe Beugungseffizienz mit möglichst geringen Verlusten wünschenswert ist.

Zur Strukturierung des Beleuchtungslichts wird dabei dem phasenselektiven Element eine vorgegebene Phasenverteilung und einer Blende in der Blendenebene eine vorgegebene Blendenstruktur aufgeprägt. Dazu wird in einem ersten Schritt eine Vorzugswellenlänge ausgewählt. Diese wird in der Regel aus einem Wellenlängenbereich ausgewählt, welcher in der Regel auch die Wellenlängen, die für die Beleuchtung der Probe verwendet werden, umfasst, d.h. die entsprechenden Laserlinien, die zur Anregung der Fluoreszenzmarker vorgesehen sind. Die Vorzugswellenlänge kann aber auch außerhalb des Wellenlängenbereichs liegen. Sie entspricht in der Regel jedoch der langwelligsten Beleuchtungswellenlänge oder ist selbst noch langwelliger als diese.

Für diese Vorzugswellenlänge wird nun in der Fokusebene des Beleuchtungsobjektivs für ein Lichtblatt vorgegebener Form dessen elektrisches Feld mit Licht der Vorzugwellenlänge bestimmt. Daraus wird die vorzugebende Phasenverteilung berechnet, sie ist das Argument des komplexen elektrischen Feldes, $\varphi = \arg(EF)$ mit der Phase $\varphi$. Für die Bestimmung beziehungsweise Berechnung des elektrischen Felds des Lichtblatts wird dabei davon ausgegangen, dass für die Vorzugswellenlänge ein mittlerer bzw. zentraler Bereich in der Blendenebene abgeblendet ist, um die nullte Ordnung, welche in der Realität zur Erzeugung eines strukturierten Lichtblatts ausgeblendet werden muss, bei der Berechnung ebenfalls auszuschließen. Die Berechnung des elektrischen Feldes im Fokus des Beleuchtungsobjektivs kann beispielsweise über eine Fouriertransformation der sogenannten Pupillenfunktion, d.h. des elektrischen Feldes im Frequenzraum, hier seiner Verteilung in der Pupille, erfolgen. Die berechnete Phasenverteilung wird dann dem phasenselektiven Element aufgeprägt, welches sich vorzugsweise im Zwischenbild befindet. Handelt es sich um ein statisches phasenselektives Element, wie beispielsweise eine Phasenplatte, so wird diese entsprechend hergestellt. Ansteuerbare phasenselektive Elemente, wie beispielsweise räumliche Lichtmodulatoren, werden entsprechend angesteuert und eingestellt.

Optional können weitere Justierungsmaßnahmen vorgenommen werden. Beispielsweise kann die Phasenverteilung mit einer einhüllenden Funktion senkrecht zur Lichtblattebene multipliziert werden, auf diese Weise kann die Dicke des Lichtblatts eingestellt werden, außerdem können Nebenmaxima senkrecht zur Lichtblattebene unterdrückt werden. Die Phasenverteilung kann auch für die Aufprägung auf das phasenselektive Element durch Größenskalierung so angepasst werden, dass das Spektrum in der Pupille dem anfangs berechneten entspricht, oder das Lichtblatt in der Probe vorgegebene Abmessungen hat.

Das phasenselektive Element wird dann in oder in der Nähe einer Zwischenbildebene in einem Beleuchtungsstrahlengang mit Beleuchtungslicht beleuchtet und das Beleuchtungslicht wird durch das phasenselektive Element strukturiert. Das strukturierte Beleuchtungslicht wird in eine dem phasenselektiven Element nachgeordnete Blendenebene, in welcher ein Frequenzspektrum des Beleuchtungslichts erzeugt wird, abgebildet. Es erfolgt dann eine Anpassung der Blendenstruktur derart, dass die nullten Ordnungen des strukturierten Beleuchtungslichts in der Blendenebene im Wesentlichen ausgeblendet werden, wodurch in einer Fokusebene eines nachgeordneten Beleuchtungsobjektivs ein mehrfarbiges, strukturiertes Lichtblatt geformt wird, mit einer Lichtblattebene, die senkrecht zur Fokusebene des Beleuchtungsobjektivs liegt. Die Probe wird dann mit dem strukturierten Lichtblatt in der Lichtblattebene beleuchtet und von der Probe abgestrahltes Licht wird in einer Detektionsrichtung detektiert, welche mit der Lichtblattebene einen von Null verschiedenen Winkel einschließt.

Die Blende in der Blendenebene kann auf verschiedene Weise weiter angepasst werden. Wird beispielsweise eine Größenskalierung vorgenommen, so kann eine Blendenjustierung dafür sorgen, dass genau die nullten Ordnungen des überlagerten Lichts ausgeblendet werden. Eine andere Möglichkeit der Justierung der Blende besteht darin, unerwünschte Nebenmaxima der Pupillenfunktion auszublenden.

Auf diese Weise wird eine lichtblattmikroskopische Beleuchtungseinrichtung so justiert, dass sie bei Verwendung von Licht der Vorzugswellenlänge für diese Vorzugswellenlänge ein bestmöglich strukturiertes Lichtblatt erzeugt und das Lichtblatt für die übrigen Wellenlängen ebenfalls eine hohe Qualität, insbesondere, was die Strukturierung betrifft, aufweist. Eine Anregung der Probe simultan bzw. quasi-simultan mit mehreren Wellenlängen wird so ermöglicht.

Dabei kann der Eingangsstrahl, beispielsweise ein gaußförmiger Laserstrahl, bevorzugt elliptisch kollimiert werden, um die Lichtleistung in einer nullten Ordnung einerseits möglichst gering zu halten und andererseits das Lichtblatt nur geringstmöglich zu beeinflussen.

Als phasenselektives Element lässt sich beispielsweise ein diffraktives optisches Element verwenden. Dieses kann als Phasenplatte statisch ausgebildet sein und einmal an eine bestimmte Wellenlänge angepasst werden. Für verschiedene Kombinationen von Wellenlängen lassen sich dann verschiedene Phasenplatten in den Strahlengang einbringen. Eine andere Möglichkeit besteht darin, als diffraktives optisches Element einen räumlichen Lichtmodulator (SLM) zu verwenden. Dies bietet den Vorteil, dass dieser über eine Ansteuerung auf verschiedene Vorzugswellenlängen und Beleuchtungswellenlängen eingestellt werden kann, ohne dass ein Wechsel notwendig wird; außerdem lassen sich mit einem SLM verschiedene Strahlformen für das Lichtblatt realisieren. Während der Analyse der Probe werden die Eigenschaften des räumlichen Lichtmodulators (SLM) jedoch nicht verändert, der SLM verhält sich statisch.

Bei Verwendung eines SLM lassen sich leichter Anpassungen im Strahlengang selbst vornehmen, beispielsweise können verschiedene Einhüllenden-Funktionen in der Richtung senkrecht zur Lichtblattebene mit der Phasenverteilung multipliziert werden und so weitere Einstellungen vorgenommen werden. Auch eine Größenskalierung lässt sich auf einen SLM einfacher vornehmen.

Während als Eingangsstrahl, welcher kollimiert und auf das phasenselektive Element gelenkt wird, oft ein Strahl mit gaußförmigem Intensitätsprofil verwendet wird, setzt man für die Berechnung des elektrischen Feldes des Lichtblatts vorzugsweise Formen an, die besser für eine gleichmäßige Ausleuchtung beziehungsweise strukturierte Beleuchtung der Probe geeignet sind als ein solch gaußförmiger Lichtstrahl, welcher selbstverständlich ebenfalls zur Berechnung des elektrischen Feldes des Lichtblatts verwendet werden kann.

In einer bevorzugten Ausgestaltung der Erfindung wird das elektrische Feld des Lichtblatts bestimmt wird, indem zur Formung des Lichtblatts zwei $\text{sinc}^3$-Strahlen verwendet werden, die sich in der Fokusebene des Beleuchtungsobjektivs kohärent überlagern. Hierbei wird von der oben angegebenen Pupillenfunktion ausgehend das elektrische Feld des Lichtblatts in der Probe, d.h. in der Fokusebene, durch Fouriertransformation berechnet. Aus dem sich in der Fokusebene ergebenden elektrischen Feld, dem Überlagerungsfeld, wird die Phase bestimmt und diese dem phasenselektiven Element aufgeprägt. Ein wesentlicher Vorteil von $\text{sinc}^3$-Strahlen liegt darin, dass sich mit ihnen ein nahezu quaderförmiges Lichtblatt mit gleichmäßiger Ausleuchtung in der Probe bilden lässt, mit nur geringen Nebenmaxima. Bei kohärenter Überlagerung lässt sich ein strukturiertes, gitterartiges Lichtblatt generieren.

In einer anderen bevorzugten Ausgestaltung wird das elektrische Feld des Lichtblatts bestimmt, indem zur Formung des Lichtblatts Besselstrahlen vorgegebener Form verwendet werden. Für einen solchen Besselstrahl wird das elektrische Feld in der Fokusebene bestimmt und rechnerisch eine Überlagerung dieses elektrischen Feldes und identischer, jeweils um einen vorgegebenen Betrag $\Delta$ in der Fokusebene voneinander beabstandeter elektrischer Felder bestimmt. Der Abstand $\Delta$ wird dabei so lange variiert, bis ein optimales Lichtblatt eingestellt ist, d.h. sich die Nebenmaxima der einzelnen Besselstrahlen bevorzugt destruktiv überlagern, so dass ein im Querschnitt langes, dünnes Lichtblatt mit nur geringen Nebenmaxima entsteht.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

## Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:

Fig.1 die schematischen Aufbau eines invertierten Lichtblattmikroskops,
Fig.2 eine erste Ausführung eines Strahlformungsmoduls,
Fig.3 eine zweite Form eines Strahlformungsmoduls,
Fig.4 eine dritte Form eines Strahlformungsmoduls,
Fig.5 eine vierte Form eines Strahlformungsmoduls,
Fig.6 einzelne Schritte der Lichtblatterzeugung mit einem Strahlformungsmodul nach Fig.5,
Fig.7 eine erste Blendenstruktur und
Fig.8 eine zweite Blendenstruktur.

## Ausführliche Beschreibung der Zeichnungen

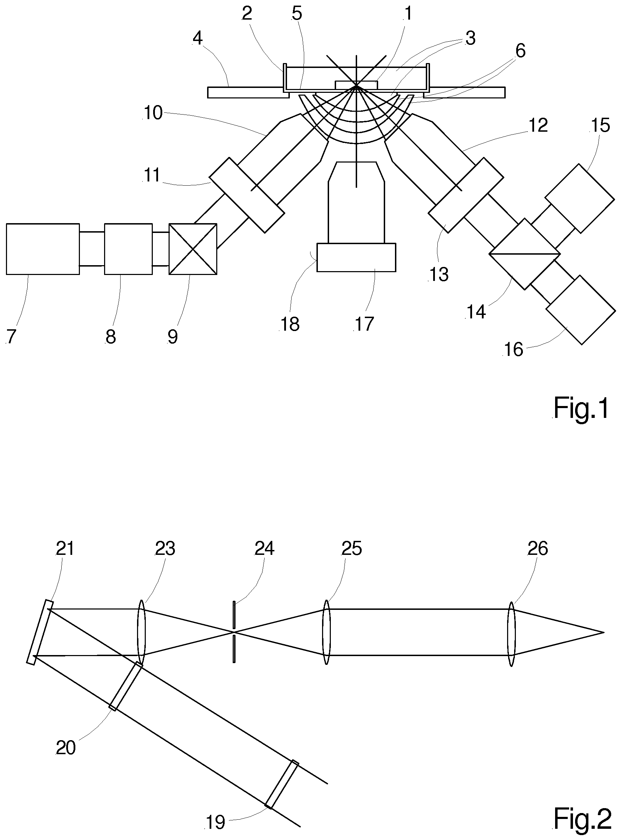

Fig.1 zeigt zunächst den grundlegenden Aufbau eines Lichtblattmikroskops, welches zur lichtblattmikroskopischen Untersuchung einer Probe verwendet werden kann. Das Lichtblattmikroskop ist hier in einer inversen Konfiguration gezeigt, dies ist nur beispielhaft zu verstehen, auch Lichtmikroskope, bei denen die Probe von oben oder von der Seite betrachtet wird, sind mögliche Ausgestaltungen. Eine Probe 1 befindet sich in einer Probenkammer 2 und ist von einer Flüssigkeit 3, beispielsweise Wasser oder einer Nährlösung umgeben. Die Probenkammer 2 besitzt Seitenwände und einen Boden aus Glas vorgegebener Dicke, die Dicke entspricht dabei beispielsweise der eines üblichen Objektträgers, beispielsweise 0,17 mm. Die Probekammer 2 ist auf einem Probentisch 4 gelagert, der Probentisch ist in allen drei Raumrichtungen manuell oder motorisch verfahrbar. Die einzelnen Elemente des Lichtblattmikroskops sind unterhalb der Probenkammer 2, die über einen transparenten Boden 5 verfügt, angeordnet. Zwischen den Objektiven des Lichtblattmikroskops und dem Boden 5 der Probenkammer 2 befindet sich ein sogenanntes virtuelles *Relay* 6 mit einer inneren und einer äußeren Linse. Zwischen der inneren Linse des virtuellen *Relays* 6 und dem Boden 5 der Probenkammer befindet sich ebenfalls die Flüssigkeit 3. Zwischen der inneren und der äußeren Linse des virtuellen *Relays* 6 befindet sich die umgebende Atmosphäre, in der Regel Luft, ebenfalls zwischen der äußeren Linse des virtuellen *Relays* 6 und den Objektiven des Lichtblattmikroskops.

Das virtuelle *Relay* 6 dient dem Ausgleich von Aberrationen, die entstehen, weil die optischen Achsen des Beleuchtungs- und des Detektionsobjektivs nicht senkrecht zum Boden 5 der Probenkammer 2 stehen. Anstelle eines virtuellen *Relays* 6 können auch andere Korrekturmechanismen wie Vorschaltlinsen oder Freiformlinsen, die in die Objektive integriert sind, verwendet werden, falls es auf solch eine Korrektur ankommt.

Auf der linken Seite ist der Beleuchtungsstrahlengang dargestellt. Licht aus einem Lasermodul 7 - hier können beispielsweise mehrere Laser verschiedener Wellenlängen untergebracht sein und es kann zwischen verschiedenen Wellenlängen ausgewählt werden, wobei auch mehrere Wellenlängen gleichzeitig ausgewählt werden können - wird über ein Strahlformungsmodul 8 und ein Scanmodul 9 - welches beispielsweise zur Erzeugung eines quasi-statischen Lichtblatts und / oder zur Winkelabtastung verwendet werden kann - auf ein Beleuchtungsobjektiv 10 gelenkt, welches das Lichtblatt in die Lichtblattebene, die hier der optischen Achse des Beleuchtungsobjektivs enthält, in die Probe abgebildet. Der Fokus des Beleuchtungsobjektivs 10, d.h. die Stelle, an welcher das Lichtblatt die dünnste Ausdehnung hat, lässt sich mit Hilfe eines Antriebs, beispielsweise eines Piezoantriebs 11 verstellen. Alternativ kann auch der Probentisch 4 verfahren werden.

Auf der rechten Seite ist ein beispielhafter Detektionsstrahlengang abgebildet. Er umfasst ein Detektionsobjektiv 12, welches analog zum Beleuchtungsobjektiv 10 mittels eines Antriebs, hier eines Piezoantriebs 13 verstellt werden kann. Die optische Achse des Detektionsobjektivs 12 schließt mit der Lichtblattebene, in der die optische Achse des Beleuchtungsobjektivs 10 liegt, einen von Null verschiedenen, hier einen rechten Winkel ein. Dies ist jedoch nicht zwingend notwendig, damit das Verfahren funktioniert, reicht ein von Null verschiedener Winkel zwischen der Ebene des Lichtblattes und der optischen Achse des Detektionsobjektivs 12 aus. Durch das Detektionsobjektiv 12 wird von der Probe 1 emittiertes Fluoreszenzlicht über einen Strahlteiler 14 auf verschiedene Detektionsmodule 15 und 16 gelenkt. Bei der Beleuchtung der Probe simultan oder quasi-simultan mit einem mehrere Wellenlängen umfassenden Lichtblatt kann beispielsweise die Detektion nach Wellenlängen unterschiedlich vorgenommen werden. In den Detektionsmodulen 15, 16 befinden sich in der Regel flächenförmige Detektoren, die die Intensität registrieren und in ein entsprechendes elektrisches Signal umwandeln, welches dann in eine Bildverarbeitung einfließt. Die lichtblattmikroskopische Anordnung wird durch ein Übersichtsobjektiv 17, welches über einen Piezoantrieb 18 verfahrbar ist, abgerundet. Das Übersichtsobjektiv 17 dient dazu, zunächst ein Übersichtsbild der Probe zu erfassen und einen interessierenden Bereich (ROI) auszuwählen, auf den dann Beleuchtung und Detektion fokussiert werden können.

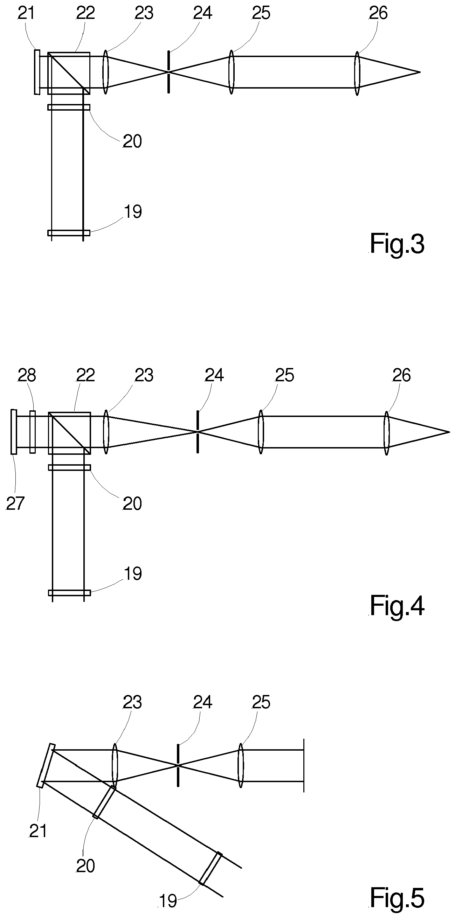

In den Figuren 2 bis 5 sind verschiedene Strahlformungsmodule dargestellt. Bei dem in Fig.2 gezeigten Strahlformungsmodul wird ein gaußförmiger Laserstrahl kollimiert. Im gezeigten Beispiel werden dazu zwei Zylinderlinsen 19 und 20 verwendet, man erhält auf diese Weise einen kollimierten elliptischen Laserstrahl anstelle eines rotationssymmetrischen, wie man ihn bei der Verwendung rotationssymmetrischer Linsen erhielte; letzteres ist selbstverständlich auch möglich. Ein elliptisch kollimierter Strahl bietet jedoch Vorteile für die Lichtblattformung, da die Form bereits eher an ein Lichtblatt angepasst ist und nicht so viel Intensität in die nullte Ordnung fließt, wie dies bei rotationssymmetrischen Strahlen der Fall wäre. Der elliptisch kollimierte Lichtstrahl fällt unter einem Winkel auf ein phasenselektives Element, hier einen nematischen SLM 21, d.h. der Winkel, den die Normale der Oberfläche des nematischen SLM 21 mit der optischen Achse der Zylinderlinsen 19 und 20 einschließt, ist von Null verschieden. Alternativ kann auch ein Strahlteiler 22 verwendet werden, dies ist in Fig.3 gezeigt.

Der nematische SLM 21 ist in oder in der Nähe einer Zwischenbildebene im Beleuchtungsstrahlengang angeordnet und wird mit dem Beleuchtungslicht, dem kollimierten Lichtstrahl, beleuchtet. Das Beleuchtungslicht wird durch das phasenselektive Element, den nematischen SLM 21 strukturiert. Dabei ist es zu bevorzugen, wenn das phasenselektive Element in der Zwischenbildebene steht, ansonsten weist das erzeugte Lichtblatt eine Defokussierung auf. Diese müsste dann durch zusätzliche Linsenelemente oder aber direkt durch Anpassen der Phasenverteilung auf dem phasenselektiven Element durch Überlagerung mit einem entsprechenden Korrekturphasenmuster ausgeglichen werden.

Über eine Linse 23 wird das strukturierte Beleuchtungslicht in eine dem phasenselektiven Element nachgeordnete Blendenebene abgebildet, die Linse 23 erzeugt in der Blendenebene, in der sich eine Blende 24 befindet, die Fourier-Transformierte des Beleuchtungslichts, d.h. das Frequenzspektrum des Strahls. Die Blende 24 kann dazu genutzt werden, eine spektrale Filterung des Strahls durchzuführen, dient jedoch insbesondere dazu, eine nullte Ordnung des strukturierten Lichts in der Blendenebene im Wesentlichen auszublenden. Dadurch wird in der Fokusebene des nachgeordneten Beleuchtungsobjektivs 10 ein strukturiertes Lichtblatt geformt mit einer Lichtblattebene, die senkrecht zur Fokusebene des Beleuchtungsobjektivs 10 liegt. Die Linsen 25 und 26 bilden anschließend das Frequenzspektrum beispielsweise auf einen nicht gezeigten Abtastspiegel ab, welcher zur Erzeugung eines quasi-statischen Lichtblatts verwendet werden kann. Alternativ kann auch eine direkte Abbildung des Strahls in das Beleuchtungsobjektiv 10 erfolgen, wenn die Linse 26 nicht verwendet wird. Dies ist in Fig.5 gezeigt.

Die Probe 1 wird dann mit dem strukturierten Lichtblatt in der Lichtblattebene beleuchtet, von der Probe abgestrahltes Licht wird in einer Detektionsrichtung detektiert, die mit der Lichtblattebene einen von Null verschiedenen Winkel einschließt, wie in Zusammenhang mit Fig.1 beschrieben.

Anstelle eines nematischen SLM 21 kann auch ein ferroelektrischer SLM 27 mit vorgeschalteter $\lambda/2$-Platte 28 verwendet werden, dies ist in Fig.4 gezeigt. Da nach der Justierung des SLM bzw. des phasenselektiven Elements dessen Eigenschaften während des Betriebs nicht geändert werden, kann Anstelle eines SLM auch ein statisches phasenselektives Element - beispielsweise eine Phasenplatte - verwendet werden, ein SLM ist jedoch leichter an verschiedene Bedingungen - wie beispielsweise verschiedene Strahlformen oder verschiedene Wellenlängen - anpassbar, da er ansteuerbar ist, während eine Phasenplatte dann ausgetauscht werden müsste.

Um das Strahlformungsmodul für die Verwendung zur Beleuchtung der Probe 1 mit einem mehrfarbigen Lichtblatt verschiedener Wellenlängen vorzubereiten, wird dem phasenselektiven Element vorab eine vorgegebene Phasenverteilung aufgeprägt, ebenso wird der Blende in der Blendenebene eine vorgegebene Blendenstruktur aufgeprägt. Dies soll im Folgenden beispielhaft für $sinc^3$-Strahlen ohne Beschränkung der Allgemeinheit beschrieben werden, denn auch andere Strahlformen lassen sich verwenden.

In einem ersten Schritt werden zunächst mehrere - mindestens zwei - Beleuchtungswellenlängen ausgewählt, aus denen Beleuchtungslicht für die Probe 1 zusammengesetzt werden soll. Da der Phasenhub des phasenselektiven Elements und insbesondere eines SLM von der Wellenlänge abhängig ist, wird für eine mittlere Wellenlänge die Modulationstiefe des phasenselektiven Elements auf $\pi$ festgelegt. Die mittlere Wellenlänge muss dabei nicht mit einer der Beleuchtungswellenlängen übereinstimmen, sondern entspricht in der Regel dem Mittelwert der längsten und der kürzesten Beleuchtungswellenlänge. Auch eine gewichtete Mittelung, die im Sinne einer Schwerpunkts-Ermittlung die Lage der einzelnen Wellenlängen in dem Wellenlängenbereich zwischen längster und kürzester Wellenlänge berücksichtigt, kann zur Bestimmung der mittleren Wellenlänge durchgeführt werden. Sollen beispielsweise die Wellenlängen 400 nm, 500 nm und 600 nm zur Erzeugung des mehrfarbigen Lichtblatts verwendet werden, so wird das phasenselektive Element für die mittlere Wellenlänge von 500 nm entsprechend eingestellt. Bei kürzeren Wellenlängen ist der Phasenhub dann größer als $\pi$ und bei längeren Wellenlängen ist der Phasenhub kleiner als $\pi$. Die Einstellung des gewünschten Phasenhubs erfolgt bei einem SLM in der Regel mit Steuerspannungen. Wird für eine Wellenlänge von 500 nm beispielhaft ein Phasenhub von $\pi$ eingestellt, so ergibt sich bei den anderen in dem Beispiel verwendeten Wellenlängen ein Phasenhub von $1{,}6\pi$ bei 400 nm und von $0{,}9\pi$ bei 600 nm.

Ist die Modulationstiefe eingestellt, so wird dem phasenselektiven Element eine vorgegebene Phasenstruktur aufgeprägt. Dazu wird zunächst eine Vorzugswellenlänge ausgewählt. Die Vorzugswellenlänge weist mindestens eine der langwelligsten Beleuchtungswellenlänge entsprechende Wellenlänge auf, sie kann aber auch noch langwelliger sein. Im vorliegenden Beispiel beträgt die Vorzugswellenlänge 600 nm. Nur für diese wird die oben und im Folgenden beschriebene Justierung vorgenommen. Die Lage des Frequenzspektrums des geformten Strahls wird für diese Wellenlänge so angepasst, dass es am Rand der Pupille liegt, also dass es zu keiner Beeinträchtigung des Lichtblatts kommt.

Selbstverständlich ist es auch möglich, eine andere Vorzugswellenlänge außerhalb des Wellenlängenbereichs zu wählen, dies hat jedoch dann den Nachteil, dass die Genauigkeit bei der Lichtblatterzeugung eventuell vermindert wird. Es ist jedoch nicht ausgeschlossen, dass die Vorzugswellenlänge selbst nicht zur Beleuchtung verwendet wird, also keine Beleuchtungswellenlänge ist.

Um die Justierung zu erleichtern, kann der SLM optional voll ausgeleuchtet werden. In der Blendenebene der Blende 24 wird zunächst der zentrale Bereich mindestens für die Vorzugswellenlänge vorsorglich abgeblendet, d.h. die nullte Ordnung des strukturierten Lichts wird in der Blendenebene im Wesentlichen ausgeblendet, da ansonsten kein strukturiertes Lichtblatt erzeugt werden kann.

In der Fokusebene des Beleuchtungsobjektivs 10 wird dann ein elektrisches Überlagerungsfeld aus der Überlagerung mindestens zweier Lichtstrahlen vorgegebener Form mit Licht der Vorzugswellenlänge bestimmt. Für das vorliegende Beispiel soll als Lichtstrahl ein $sinc^3$-Strahl verwendet, d.h. in der Fokusebene werden mindestens zwei $sinc^3$-Strahlen kohärent überlagert, jedoch sind auch andere Strahlformen verwendbar, auch gaußförmige Strahlen.

Das sich in der Fokusebene aufgrund der Überlagerung ergebende Überlagerungsfeld wird in der Regel rechnerisch bestimmt. Dies kann beispielsweise mit Hilfe der sogenannten Pupillenfunktion erfolgen. Im nächsten Schritt wird die Phasenverteilung in der Fokusebene des Beleuchtungsobjektivs 10 bestimmt, dies erfolgt, indem auf das komplexe elektrische Überlagerungsfeld die "arg"-Funktion angewendet wird. Optional kann diese Phasenverteilung noch mit einer einhüllenden Funktion multipliziert werden, die das Lichtblatt nach oben und unten, senkrecht zur Lichtblattebene beschränkt.

Die solchermaßen berechnete Phasenverteilung entspricht dann der vorzugebenden Phasenverteilung und wird dem phasenselektiven Element, beispielsweise einem SLM, aufgeprägt, d.h. auf diesem dargestellt.

Optional kann dann eine Skalierung hinsichtlich der Größe, d.h. der flächigen Ausdehnung der Phasenverteilung auf dem phasenselektiven Element vorgenommen werden, so dass das Spektrum in der Pupille dem anfangs berechneten entspricht, bzw. so dass das Lichtblatt in der Probe entsprechend vorgegebene Abmessungen hat, die beispielsweise mit der Größe der Probe korrelieren.

Während die Blende 24 bis dahin nur einen mittleren bzw. zentralen Bereich um die optische Achse ausgeblendet hat, welcher in der Regel nicht exakt der nullten Ordnung des kohärent überlagerten, gebeugten Beleuchtungslichts der Vorzugswellenlänge entspricht, wird die Blendenstruktur der Blende 24 nun so angepasst, dass so gut wie möglich genau die nullte Ordnung für die Vorzugswellenlänge und darüber hinaus auch für die bzw. die anderen Beleuchtungswellenlängen des Beleuchtungslichts ausgeblendet wird. Darüber hinaus kann die Blendenstruktur auch so angepasst werden, dass unerwünschte Nebenmaxima der Pupillenfunktion ausgeblendet werden.

Anschließend wird noch die Kollimierung des auf den SLM bzw. das phasenselektive Element treffenden Eingangsstrahls aus Licht der Beleuchtungswellenlängen angepasst. Wird eine elliptische Kollimierung verwendet, so sollte die Anpassung dahingehend erfolgen, dass die Leistung in der gebeugten nullten Ordnung möglichst gering ist und das Lichtblatt gleichzeitig nicht beeinflusst wird. Alternativ kann das phasenselektive Element auch mit einer Rechteckfunktion oder gleichmäßig beleuchtet werden, wobei jedoch dann der Hauptteil des eingestrahlten Lichts in die nullte Ordnung gebeugt wird, welche herausgefiltert werden muss, da ansonsten kein Lichtblatt erzeugt werden kann. Eine elliptisch kollimierte, gaußförmige Intensitätsverteilung kann beispielsweise auch durch Multiplizieren der Phasenverteilung mit einer eindimensionalen einhüllenden Funktion, beispielsweise einer Exponentialfunktion erreicht werden. Die Multiplikation mit einer einhüllenden Funktion kann also alternativ zur optischen, elliptischen Kollimierung des Eingangsstrahls verwendet werden, oder aber auch in Kombination.

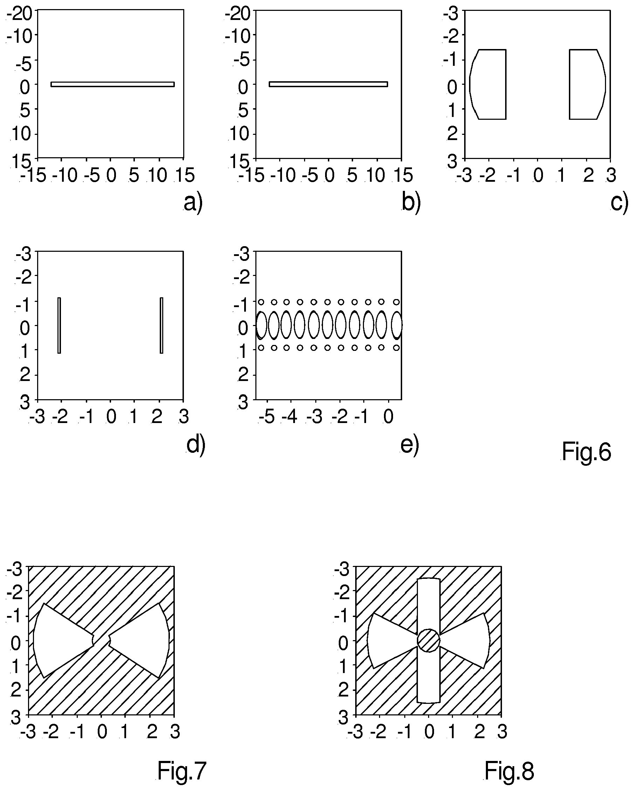

Wie sich diese Maßnahmen auswirken, ist in Fig. 6 dargestellt. In Fig. 6a ist die Intensität auf einem SLM dargestellt, wenn dieser mit einem elliptisch kollimierten Gaußstrahl beleuchtet wird. Nur der schmale Bereich in der Mitte wird beleuchtet. Entsprechend ist auch die in Fig. 6b gezeigte Phasenverteilung auf dem SLM nur im mittleren Bereich, in welchem sie variiert, von Null verschieden. Der Bereich markiert hier die einhüllende Funktion, außerhalb welcher die Phasenverteilung Null ist, d.h. die Phase nicht geändert wird. In der Blendenebene hat die Blende 24 dann die in Fig. 6c gezeigte Blendenstruktur für ein einfarbiges $sinc^3$-Lichtblatt. In der Blendenebene mit der Blende 24 ergibt sich die in Fig. 6d gezeigte Intensitätsverteilung und in der Fokusebene des Beleuchtungsobjektivs 10 das in Fig.6e im Querschnitt gezeigte strukturierte Lichtblatt, wobei die Ordinate der Detektionsrichtung entspricht.

Wird der SLM bzw. das phasenselektive Element gleichmäßig beleuchtet, so werden bis zu 98% des einfallenden Lichts in die nullte Ordnung gebeugt und stehen damit nicht mehr für die Lichtblattintensität zur Verfügung. Vorzugsweise wird das phasenselektive Element daher wie beschrieben mit einem elliptisch kollimierten Strahl mit gaußförmigen Intensitätsprofil beleuchtet. Der Strahl sollte in etwa die Abmessungen der Phasenverteilung auf dem SLM haben. Falls die Phasenverteilung mit einer einhüllenden Funktion, z.B. einer Gaußfunktion multipliziert wird, hat dies direkte Auswirkung auf die Form des Lichtblatts. Je breiter die Gaußfunktion ist, desto dünner wird das Lichtblatt. Allerdings sind dann die Nebenmaxima entsprechend stärker ausgeprägt. Je schmaler andererseits die Gaußfunktion gewählt wird, desto mehr Licht wird bei gleichbleibender Beleuchtung in die nullte Ordnung gebeugt. Insofern ist es vorteilhaft, die Phasenverteilung nicht mit einer einhüllenden Funktion zu multiplizieren, sondern direkt die Beleuchtung des phasenselektiven Elements anzupassen. Auf diese Weise kann eine identische Identitätsverteilung in der Probe erzielt werden. Der Vorteil liegt darin, dass der Anteil der in die nullte Ordnung gebeugten Energie äußerst gering ist, in der Regel nicht höher als 10%.

Anstelle für die Beleuchtung überlagerte sinc³-Strahlen zu verwenden, lassen sich auch Lichtstrahlen anderer vorgegebener Form verwenden, beispielsweise Besselstrahlen. Für diese wird das elektrische Überlagerungsfeld dadurch bestimmt, indem als Lichtstrahl ein Besselstrahl vorgegebener Form verwendet wird, das elektrische Feld des Besselstrahls in der Fokusebene bestimmt wird und rechnerisch eine Überlagerung dieses elektrischen Feldes und identischer, jeweils um einen vorgegebenen Betrag $\Delta$ in der Fokusebene des Beleuchtungsobjektivs 10 voneinander beabstandeter elektrischer Felder bestimmt wird. Der Abstand $\Delta$ wird dabei so lange variiert, bis ein optimales Lichtblatt eingestellt ist. Ansonsten wird wie bei der Erzeugung eines strukturierten Lichtblatts aus der Überlagerung von sinc³-Strahlen vorgegangen.

Da die Justierung nur für die langwelligste Wellenlänge - hier die Vorzugswellenlänge von 600 nm - vorgenommen wurde, ist die Lage des aus mehreren Farben zusammengesetzten, geformten Strahls dann so angepasst, dass die auf dem phasenselektiven Element dargestellte Phasenverteilung für die kürzeren Wellenlängen als die zur Justierung verwendete einem sinc³-Strahl mit geringerer numerischer Apertur entspricht, demzufolge liegt das Frequenzspektrum des entsprechenden Strahls weiter innen in der Pupille, analoges gilt für Besselstrahlen.

Bei einem Phasenhub von $\pi$ ist die Beugungseffizienz am höchsten und die gesamte einfallende Laserstrahlung wird in den sinc³- oder Besselstrahl umverteilt. Bei einer davon abweichenden Modulationstiefe verringert sich die Beugungseffizienz und ein Teil der Laserleistung wird in die nullte Ordnung umverteilt. Findet kein Phasenhub statt beziehungsweise um ein Vielfaches von $2\pi$, so wird die gesamte Laserleistung in die nullte Ordnung gebeugt, so dass kein sinc³-Strahl oder Besselstrahl erzeugt wird. Wird die nullte Ordnung mit der Blende 24 herausgefiltert, so ist - abgesehen von der Leistung - das sinc³-Lichtblatt unabhängig von der Modulationstiefe der Phasenverteilung. Im vorliegenden Beispiel liegt die Beugungseffizienz bei der Wellenlänge von 400 nm bei 30%, bei der Wellenlänge von 500 nm bei 85% und bei der Wellenlänge von 600 nm bei 78%. Obwohl die Modulationstiefe bei der mittleren Wellenlänge von 500 nm auf $\pi$ eingestellt wurde, ist die Beugungseffizienz nicht 100%, sondern nur 85%. Dies liegt daran, dass die Beleuchtung mit einem elliptischen Gaußstrahl nur eine Näherung darstellt, die in einem realen Aufbau gut erzeugt werden kann. Um eine Beugungseffizienz von 100% zu erreichen, müsste auf dem SLM nicht nur die Phase, sondern auch die Intensität des berechneten Lichtblatts dargestellt werden. Dies ist aber nur mit extremem technischen Aufwand zu verwirklichen. Angepasste Blenden für die Verwendung mit mehrfarbigen Lichtblättern sind für sinc³-Strahlen in Fig.7 und für Besselstrahlen in Fig.8 gezeigt.

Bezuaszeichenliste

| | |
|---|---|
| 1 | Probe |
| 2 | Probenkammer |
| 3 | Flüssigkeit |
| 4 | Probentisch |
| 5 | transparenter Boden |
| 6 | virtuelles *Relay* |
| 7 | Lasermodul |
| 8 | Strahlformungsmodul |
| 9 | Scanmodul |
| 10 | Beleuchtungsobjektiv |
| 11 | Piezoantrieb |
| 12 | Detektionsobjektiv |
| 13 | Piezoantrieb |
| 14 | Strahlteiler |
| 15, 16 | Detektionsmodul |
| 17 | Übersichtsobjektiv |
| 18 | Piezoantrieb |
| 19, 20 | Zylinderlinsen |
| 21 | nematischer SLM |
| 22 | Strahlteiler |
| 23 | Linse |
| 24 | Blende |
| 25, 26 | Linse |

27      ferroelektrischer SLM

28      $\lambda/2$-Platte

**Patentansprüche**

1. Verfahren zur lichtblattmikroskopischen Untersuchung einer Probe (1), bei dem

    - mehrere Beleuchtungswellenlängen ausgewählt werden, aus denen Beleuchtungslicht für die Probe (1) zusammengesetzt wird,
    - für eine mittlere Wellenlänge die Modulationstiefe eines phasenselektiven Elements auf $\pi$ festgelegt wird,
    - wobei dem phasenselektiven Element eine vorgegebene Phasenverteilung und einer Blende (24) in einer Blendenebene eine vorgegebene Blendenstruktur aufgeprägt wird, indem (i) eine Vorzugswellenlänge ausgewählt wird, welche mindestens eine der langwelligsten Beleuchtungswellenlänge entsprechende Wellenlänge aufweist, (ii) in der Fokusebene eines Beleuchtungsobjektivs (10) für ein Lichtblatt vorgegebener Form dessen elektrisches Feld mit Licht der Vorzugswellenlänge bestimmt und daraus die vorzugebende Phasenverteilung berechnet wird, wobei in der Blendenebene ein mittlerer Bereich ausgeblendet wird, so dass (iii) die Blendenstruktur die nullte Ordnung des strukturierten Lichts der Vorzugswellenlänge ausblendet,
    - das phasenselektive Element in oder in der Nähe einer Zwischenbildebene in einem Beleuchtungsstrahlengang mit Beleuchtungslicht beleuchtet wird und das Beleuchtungslicht durch das phasenselektive Element strukturiert wird,
    - das strukturierte Beleuchtungslicht in eine dem phasenselektiven Element nachgeordnete Blendenebene, in welcher ein Frequenzspektrum des Beleuchtungslichts erzeugt wird, abgebildet wird,
    - die Blendenstruktur angepasst wird, so dass die nullten Ordnungen des strukturierten Beleuchtungslichts in der Blendenebene im wesentlichen ausgeblendet werden, wodurch in einer Fokusebene des nachgeordneten Beleuchtungsobjektivs (10) ein strukturiertes, mehrfarbiges Lichtblatt geformt wird, mit einer Lichtblattebene, die senkrecht zur Fokusebene des Beleuchtungsobjektivs (10) liegt,
    - die Probe (1) mit dem strukturierten Lichtblatt in der Lichtblattebene beleuchtet wird und von der Probe (1) abgestrahltes Licht in einer Detektionsrichtung detektiert wird, welche mit der Lichtblattebene einen von Null verschiedenen Winkel einschließt.

2. Verfahren nach Anspruch 1, **dadurch gekennzeichnet, dass** das elektrische Feld des Lichtblatts bestimmt wird, indem zur Formung des Lichtblatts mindestens zwei sinc$^3$-Strahlen in der Fokusebene des Beleuchtungsobjektivs (10) kohärent überlagert werden, und das sich in der Fokusebene ergebende elektrische Feld berechnet wird.

3. Verfahren nach Anspruch 1, **dadurch gekennzeichnet, dass** das elektrische Feld des Lichtblatts bestimmt wird, indem zur Formung des Lichtblatts Besselstrahlen vorgegebener Form verwendet werden, das elektrische Feld eines solchen Besselstrahls in der Fokusebene bestimmt wird, und rechnerisch eine Überlagerung dieses elektrischen Feldes und identischer, jeweils um einen vorgegebenen Betrag $\Delta$ in der Fokusebene voneinander beabstandeter elektrischen Felder bestimmt wird.

4. Verfahren nach einem der vorgenannten Ansprüche, **dadurch gekennzeichnet, dass** die Blendenstruktur Nebenmaxima in der Blendenebene ausblendet.

5. Verfahren nach einem der vorgenannten Ansprüche, **dadurch gekennzeichnet, dass** das Beleuchtungslicht vor dem Auftreffen auf das phasenselektive Element zu einem Strahl mit einem einer Gaußverteilung entsprechendem Intensitätsprofil geformt wird, welcher elliptisch kollimiert ist.

6. Verfahren nach einem der vorgenannten Ansprüche, **dadurch gekennzeichnet, dass** als phasenselektives Element ein diffraktives optisches Element verwendet wird.

7. Verfahren nach Anspruch 6, **dadurch gekennzeichnet, dass** als diffraktives optisches Element ein räumlicher Lichtmodulator verwendet wird.

8. Verfahren nach einem der Ansprüche 1 bis 6, **dadurch gekennzeichnet, dass** als mittlere Wellenlänge der Mittelwert der Beleuchtungswellenlängen mit der längsten und kürzesten Wellenlänge verwendet wird, oder eine Wellenlänge, bei der eine möglichst hohe Beugungseffizienz gefordert ist.

**Claims**

1. Method for examining a specimen (1) by means of light sheet microscopy, in which

   - several illumination wavelengths are selected, of which illumination light for the specimen (1) is composed,
   - for a middle wavelength the modulation depth of a phase-selective element is fixed at $\pi$,
   - wherein a predefined phase distribution is impressed on the phase-selective element and a predefined aperture structure is impressed on an aperture (24) in an aperture plane, in that (i) a preferred wavelength is selected which comprises at least a wavelength corresponding to the longest illumination wavelength, (ii) in the focal plane of an illumination objective (10) for a light sheet of predefined shape, its electric field is determined with light of the preferred wavelength, and therefrom the phase distribution to be predefined is calculated, wherein, in the aperture plane, a middle range is removed, with the result that (iii) the aperture structure removes the zero order of the structured light of the preferred wavelength,
   - the phase-selective element is illuminated with illumination light in or near to an intermediate image plane in an illumination beam path and the illumination light is structured by the phase-selective element,
   - the structured illumination light is imaged into an aperture plane, arranged downstream of the phase-selective element, in which a frequency spectrum of the illumination light is generated,
   - the aperture structure is adapted with the result that the zero orders of the structured illumination light are substantially removed in the aperture plane, whereby in a focal plane of the downstream illumination objective (10) a structured, multicoloured light sheet is formed with a light sheet plane which is perpendicular to the focal plane of the illumination objective (10),
   - the specimen (1) is illuminated with the structured light sheet in the light sheet plane and light emitted by the specimen (1) is detected in a detection direction which forms an angle different from zero with the light sheet plane.

2. Method according to claim 1, **characterized in that** the electric field of the light sheet is determined by coherently superimposing at least two sinc$^3$ beams in the focal plane of the illumination objective (10) to shape the light sheet, and calculating the electric field resulting in the focal plane.

3. Method according to claim 1, **characterized in that** the electric field of the light sheet is determined by using Bessel beams of predefined shape to shape the light sheet, determining the electric field of such a Bessel beam in the focal plane, and arithmetically determining a superimposition of this electric field and identical electric fields spaced apart from each other in each case by a predefined amount $\Delta$ in the focal plane.

4. Method according to one of the preceding claims, **characterized in that** the aperture structure removes side lobes in the aperture plane.

5. Method according to one of the preceding claims, **characterized in that** the illumination light, before it strikes the phase-selective element, is shaped into a beam with an intensity profile, corresponding to a Gaussian distribution, which is collimated elliptically.

6. Method according to one of the preceding claims, **characterized in that** a diffractive optical element is used as phase-selective element.

7. Method according to claim 6, **characterized in that** a spatial light modulator is used as diffractive optical element.

8. Method according to one of claims 1 to 6, **characterized in that** the average of the illumination wavelengths with the longest and shortest wavelength, or a wavelength at which the highest possible diffraction efficiency is required, is used as middle wavelength.

**Revendications**

1. Procédé d'examen d'un échantillon (1) par microscopie à nappe de lumière, dans lequel

   - plusieurs longueurs d'ondes d'éclairement sont sélectionnées, lesquelles composant la lumière d'éclairement de l'échantillon (1),
   - pour une longueur d'onde moyenne la profondeur de modulation d'un élément sélectif en phase est fixée à $\pi$,
   - dans lequel une distribution de phase prédéfinie est conférée à l'élément sélectif en phase et une structure de diaphragme prédéfinie est conférée à un diaphragme (24) dans un plan de diaphragme, en ce que (i) une longueur d'onde préférée qui comprend au moins une longueur d'onde correspondant à la plus longue longueur d'onde d'éclairement est sélectionnée, (ii) dans le plan focal d'un objectif d'éclairement (10) pour une nappe de lumière d'une forme prédéfinie, son champ électrique est déterminé avec une lumière de la longueur d'onde préférée, et à partir de cela la distribution de phase à prédéfinir est calculée, dans lequel, dans le plan de diaphragme, une plage moyenne est supprimée, de telle sorte que (iii) la structure de diaphragme supprime l'ordre zéro de la lumière structurée de la longueur d'onde préférée,

- l'élément sélectif en phase est illuminé avec une lumière d'éclairement à ou près d'un plan d'image intermédiaire dans un trajet de faisceau d'éclairement et la lumière d'éclairement est structurée par l'élément sélectif en phase,
- la lumière d'éclairement structurée est imagée dans un plan de diaphragme, agencé en aval de l'élément sélectif en phase, dans lequel un spectre de fréquences de la lumière d'éclairement est généré,
- la structure de diaphragme est adaptée de telle sorte que les ordres zéro de la lumière d'éclairement structurée soient sensiblement supprimés dans le plan de diaphragme, moyennant quoi dans un plan focal de l'objectif d'éclairement aval (10) une nappe de lumière structurée, multicolore, est formée avec un plan de nappe de lumière qui est perpendiculaire au plan focal de l'objectif d'éclairement (10),
- l'échantillon (1) est illuminé avec la nappe de lumière structurée dans le plan de la nappe de lumière et la lumière émise par l'échantillon (1) est détectée dans un sens de détection qui forme un angle différent de zéro avec le plan de la nappe de lumière.

2. Procédé selon la revendication 1, **caractérisé en ce que** le champ électrique de la nappe de lumière est déterminé en superposant de manière cohérente au moins deux faisceaux $sinc^3$ dans le plan focal de l'objectif d'éclairement (10) pour mettre en forme la nappe de lumière, et en calculant le champ électrique résultant dans le plan focal.

3. Procédé selon la revendication 1, **caractérisé en ce que** le champ électrique de la nappe de lumière est déterminé en utilisant des faisceaux de Bessel d'une forme prédéfinie pour mettre en forme la nappe de lumière, déterminant le champ électrique d'un tel faisceau de Bessel dans le plan focal, et déterminant arithmétiquement une superposition de ce champ électrique et de champs électriques identiques espacés les uns des autres dans chaque cas par une quantité prédéfinie $\Delta$ dans le plan focal.

4. Procédé selon l'une des revendications précédentes, **caractérisé en ce que** la structure de diaphragme supprime les lobes secondaires dans le plan de diaphragme.

5. Procédé selon l'une des revendications précédentes, **caractérisé en ce que** la lumière d'éclairement, avant de frapper l'élément sélectif en phase, est mise en forme en un faisceau ayant un profil d'intensité, correspondant à une distribution gaussienne, qui est collimaté elliptiquement.

6. Procédé selon l'une des revendications précédentes, **caractérisé en ce qu'**un élément optique de diffraction est utilisé comme élément sélectif en phase.

7. Procédé selon la revendication 6, **caractérisé en ce qu'**un modulateur de lumière spatiale est utilisé comme élément optique de diffraction.

8. Procédé selon l'une des revendications 1 à 6, **caractérisé en ce que** la moyenne des longueurs d'ondes d'éclairement avec la plus longue et la plus courte longueur d'onde, ou une longueur d'onde à laquelle la plus grande efficacité de diffraction possible est nécessaire, est utilisée comme longueur d'onde moyenne.

Fig.1

Fig.2

Fig.3

Fig.4

Fig.5

Fig.6

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10257423 A1
- WO 20040535558 A1
- WO 2012110488 A1
- WO 2012122027 A1
- US 20130286181 A1
- WO 2014005682 A1

**In der Beschreibung aufgeführte Nicht-Patentliteratur**

- **V. KETTUNEN et al.** Propagation-invariant spot arrays. *Optics Letters,* 1998, vol. 23 (16), 1247
- **ROHRBACH et al.** A line scanned light-sheet microscope with phase shaped self-reconstructing beams. *Optics Express,* 2010, vol. 18, 24229